# EUROPEAN PATENT APPLICATION

(11) **EP 2 478 982 A1**
(43) Date of publication of application: **25.07.2012**
(21) Application number: 11151704.1
(22) Date of filing: 21.01.2011
(51) Int. Cl.: B23B 27/06, B23B 29/04

(54) **Cutting insert for thread cutting and cutting tool**

(71) Applicant: VARGUS Ltd., 22311 Nahariya (IL)
(72) Inventor: Morgulis, Rafael, Carmiel (IL); Zaretski, Artur, Nesher (IL)
(74) Representative: Patentanwälte Ruff, Wilhelm, Beier, Dauster & Partner

(57) **Abstract**

The invention relates to a thread cutting insert (1) comprising a upper face (20) and a lower face (21), at least three lateral walls (31, 32, 33, 34) extending between the upper face (20) and the lower face (21), and at least two cutting edges (41, 42, 43, 44) formed in a transition region between two of the lateral walls (31, 32, 33, 34) and the upper face (20), wherein at least one of the cutting edges (41, 42, 43, 44) is sandwiched between a first supporting surface (71 a, 72a, 73a, 74a) and a second supporting surface (71 b, 72b, 73b, 74b) provided on the respective lateral wall (31, 32, 33, 34). Further, the invention relates to a tool holder for receiving a thread cutting insert (1).

## Description

The invention relates to the technical field of thread cutting, in particular thread turning, with the use of a cutting insert. In particular, the invention relates to a cutting insert for thread cutting having at least two cutting edges. Further, the invention relates to a tool holder for receiving a cutting insert.

US 4,572,712 discloses a cutting insert for thread cutting comprising parallel first and second top surfaces and four lateral surfaces extending there between, wherein intersecting first and second ones of said lateral surfaces define first supporting edges adapted to rest against supporting surface means on a tool holder, and intersecting third and fourth ones of said lateral surfaces are provided with cutting teeth. A rake face for the cutting teeth on said third lateral surface is provided on said first top surface and a rake face for the cutting teeth on said fourth lateral surface is provided on said second top surface so that the cutting teeth on the one of said third and fourth lateral surfaces which is inactive during cutting by means of the other of said third and fourth lateral surfaces can be brought into cutting position by turning the cutting insert about an imaginary symmetry line which bisects an angle formed by said third and fourth lateral surfaces.

In addition, triangular indexable inserts are known, wherein cutting edges with one cutting tooth or more cutting teeth or cutting points are provided in the region of the tips of the triangular inserts. Lateral walls of the insert adjacent to the cutting edges are used for a positioning of the insert in a holder, wherein the size of the lateral walls is decreased when increasing the length of the cutting edge.

It is the object of the invention to provide cutting insert for thread cutting having at least two cutting edges and a cutting tool comprising a holder with a pocket for receiving a replaceable cutting insert, wherein a positioning of the insert with high stability is assured.

This object is solved by a thread cutting insert, a tool holder and a cutting tool with the features of claims 1, 10, and 12.

According to a first aspect, a thread cutting insert is provided, the thread cutting insert comprising an upper face and a lower face, at least three lateral walls extending between the upper face and the lower face, and at least two cutting edges formed in a transition region between two of the lateral walls and the upper face, wherein at least one of the cutting edges is sandwiched between a first supporting surface and a second supporting surface provided on the associated lateral wall.

During thread turning, only one of the cutting edges is in use. The cutting insert is received in a tool holder, wherein the remaining lateral walls may serve as supporting means. In particular, a lateral wall provided with a currently unused cutting edge may function as supporting means. In accordance with the invention, the lateral wall is provided with a first supporting surface and a second supporting surface, wherein the respective cutting edge is sandwiched between the first supporting surface and the second supporting surface. Providing two supporting surfaces distanced from each other on one lateral wall increases the stability. In addition, as the two supporting surfaces are arranged on both sides of the cutting edge, the distance between the supporting surfaces is maximized and a stable positioning is achieved even when the supporting surfaces itself are small in size. This allows increasing the size of the cutting edge without increasing the size of the insert.

According to a preferred embodiment, the lower face is essentially planar for positioning the insert in a pocket of a tool holder. Alternatively or in addition, the upper face comprises an essentially planar top surface. The planar lower face and/or the planar top surface are used for defining an angle of inclination and/or thread profile angles.

In accordance with one embodiment, the first supporting surface and/or the second supporting surface extends essentially perpendicular to the planar lower face and/or the planar top surface. The lower face, the first supporting surface and the second supporting surface together allow a stable and repeatable positioning of the insert.

According to one embodiment, each cutting edge comprises a plurality of cutting teeth. When using a multi-tooth cutting edge, fewer passes are required for cutting a thread. Thereby, the productivity is increased and tool costs are lowered. In accordance with the description, a multi-tooth cutting edge is defined as a cutting edge having at least two, preferably three or more cutting teeth or cutting points. The forces acting on multi-tooth cutting edges during thread turning are generally higher than forces acting on single tooth cutting edges. Therefore, the stable positioning using a first supporting surface and a second supporting surface sandwiching a cutting edge not in use is of particular advantage for multi-tooth cutting inserts.

In one embodiment, at least the lateral walls provided with a cutting edge are inclined for assuring a clearance during thread turning. When using the respective cutting edge, the angle of inclination influences a front clearance.

Several systems are known for fixing an insert on a tool holder. In one embodiment, a wedge clamping system is provided. In preferred embodiments, the insert is provided with a central through hole for receiving a clamping screw. In one embodiment, a clamping wedge is provided for co-operating with a central clamping screw. In other embodiments, the insert is fixed using only the clamping screw.

The insert has a polygon shape, for example a square shape, a rectangular shape and/or a pentagonal shape. In a preferred embodiment, the insert has an essentially triangular shape with three lateral walls.

According to a preferred embodiment an indexable thread cutting insert is provided, wheren cutting edges are formed in the transition region between the lateral walls and the upper face, each cutting edge being sandwiched between a first supporting surface and a second supporting surface provided on the associated lateral wall. Indexable inserts offer the advantage of repeatability in positioning.

According to another aspect of the invention, a tool holder with a pocket for receiving a thread cutting insert is provided, wherein the pocket is provided with at least one supporting side wall for abutment of a first supporting surface and/or a second supporting surface provided on one lateral wall of the insert. For threading operations, a first supporting surface and/or a second supporting surface of at least one lateral wall associated with a currently unused cutting edge are used for the positioning of the insert. In some embodiments, an indexable insert is provided, wherein all lateral walls of the insert are provided with cutting edges sandwiched by a first and a second supporting surface. In one embodiment, the pocket of the tool holder is provided with supporting side walls adapted for abutment of all supporting surfaces associated to currently unused cutting edges. In other embodiments, the pocket is adapted to contact only some of the supporting surfaces associated to currently unused cutting edges.

In a preferred embodiment, the at least one supporting side wall is provided with a recess for receiving the cutting edge sandwiched between the first supporting surface and the second supporting surface.

According to another aspect of the invention, a cutting tool comprising a tool holder with a pocket and a thread cutting insert detachably received in the pocket is provided. Preferably, clamping means are provided for detachably fixing the insert in the pocket. In one embodiment, the clamping means comprise a clamping wedge. Alternatively or in addition in preferred embodiments, the clamping means comprise at least one clamping screw.

In another preferred embodiment, an anvil or shim is provided for orienting the insert in the pocket. The anvil or shim is positioned under the insert for tilting the insert in order to set the helix angle to match the thread being cut.

In the following, an embodiment of the invention will be described in detail based on several schematic drawings in which
- Fig. 1: is a schematic top view of a cutting insert;
- Fig. 2: is a schematic side view of the cutting insert of Fig. 1;

- Fig. 3: is a schematic perspective view of the cutting insert of Fig. 1;
- Fig. 4: is a schematic perspective view of a cutting tool comprising a holder with a pocket for receiving the cutting insert of Fig. 1;
- Fig. 5: is a schematic explosive view of the cutting tool of Fig. 4;
- Fig. 6: is a schematic side view of the cutting tool of Fig. 4;
- Fig. 7: is a schematic top view of the cutting tool of Fig. 4; and
- Fig. 8: is a schematic perspective view of a cutting insert having a square shape;

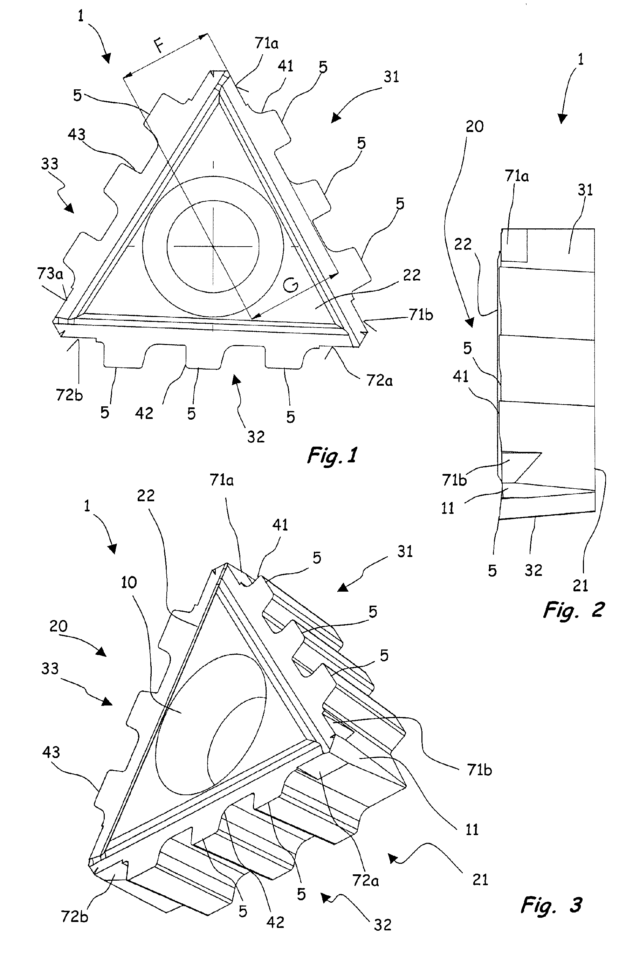

Fig. 1 to 3 schematically show an embodiment of a cutting insert 1 for thread cutting. The cutting insert 1 for thread cutting is also referred to as thread cutting insert 1 or simply cutting insert 1. In the embodiment shown in figs. 1 to 3, the cutting insert 1 has an essentially triangular shape. The thread cutting insert 1 comprises am upper face 20 and a lower face 21. The cutting insert 1 further comprises lateral walls 31, 32, 33 extending between the upper face 20 and the lower face 21. In the triangular embodiment, three lateral walls 31, 32, 33 are provided. On each lateral wall 31, 32, 33, a cutting edge 41, 42, 43 with three outwardly projecting cutting teeth 5 is formed. The upper face 20 is provided with an essentially planar top surface 22. Chamfered chip deflecting surfaces 23, 24, 25 are provided between the top surface 22 and each cutting edge 41, 42, 43 for forming a rake angle.

On each lateral wall 31, 32, 33, a first supporting surface 71 a, 72a, 73a and a second supporting surface 71 b, 72b, 73b are provided, wherein the cutting teeth 5 are sandwiched between the first supporting surface 71 a, 72a, 73a and the second supporting surface 71 b, 72b, 73b. The insert 1 is positioned in a pocket of a tool holder (not depicted in figs. 1 to 3) using the supporting surfaces 71 a, 72a, 73a and 71 b, 72b, 73b. As the supporting surfaces 71 a, 72a, 73a and 71 b, 72b, 73b are arranged on both sides of the cutting edges 41, 42, 43, the supporting surfaces 71 a, 72a, 73a and 71 b, 72b, 73b are distanced from each other, wherein a distance between the supporting surfaces 71 a, 72a, 73a and 71 b, 72b, 73b is maximized and, therefore, a positioning stability is optimized.

As best seen in fig. 3, the lateral walls 31, 32, 33 are inclined with respect to the upper face 20 or lower face 21 for providing a cutting edge front clearance. To this end, angles defined between the lower face 21 and the lateral walls 31, 32, 33 are larger than 90°, so that the cutting edges 41, 42, 43 project beyond respective edges between the lower face 21 and the lateral walls 31, 32, 33. The first supporting surface 71 a, 72a, 73a and the second supporting surface 71 b, 72b, 73b are each oriented essentially perpendicular to the lower face 21. In addition, the cutting teeth 5 are inclined with respect to a normal direction of the lower face 21 for providing a side clearance.

In the embodiment, the supporting surfaces 71 a, 72a, 73a and 71 b, 72b, 73b are provided in a region of the lateral walls 31, 32, 33 adjoining the upper side 20. The distance F between the geometrical center of the insert 1 and the supporting surfaces 71 a, 72a, 73a and 71 b, 72b, 73b is smaller than the minimal distance G between the geometrical center and the cutting edge 41, 42, 43. Due to the inclination of the lateral walls 31, 32, 33 for providing a front clearance, the distance F depends on the extension of the supporting surfaces 71 a, 72a, 73a and 71 b, 72b, 73b. In the embodiment shown, the supporting surfaces 71 a, 72a, 73a and 71 b, 72b, 73b extend over approximately one fourth of the height of the lateral walls 31, 32, 33. This allows providing sufficiently large supporting surfaces while keeping the distance F also sufficiently large.

The shape of the cutting teeth 5 is adapted to the type of thread to be cut. In the embodiment shown, the cutting teeth 5 are adapted for cutting a API thread.

The corners of insert 1 shown are provided with truncated surfaces 11, 12, 13 for providing a clearance.

The insert 1 is further provided with a central through hole 10 used for attaching the insert to a tool holder.

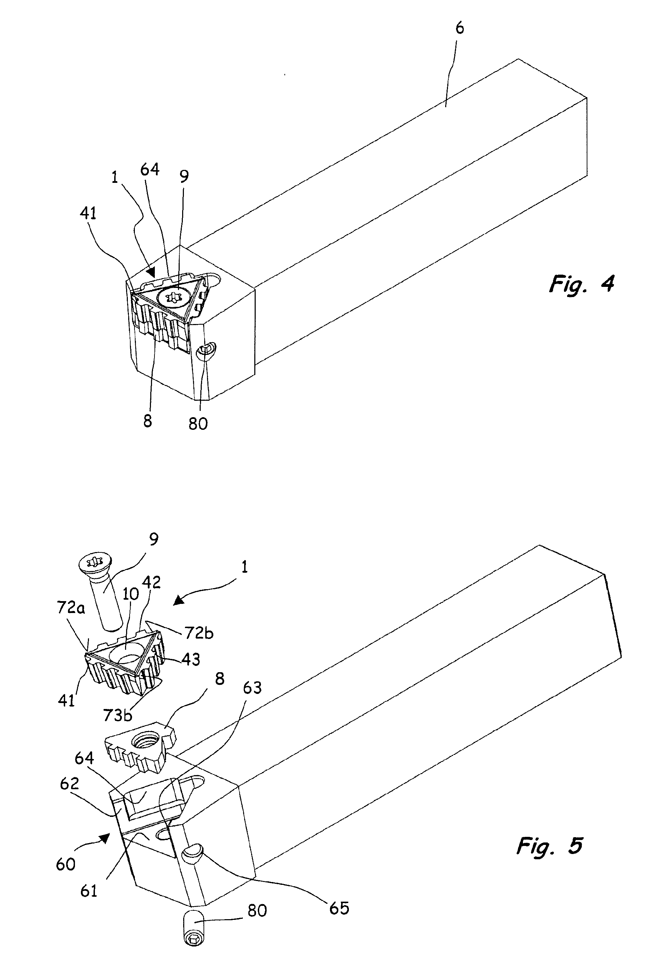

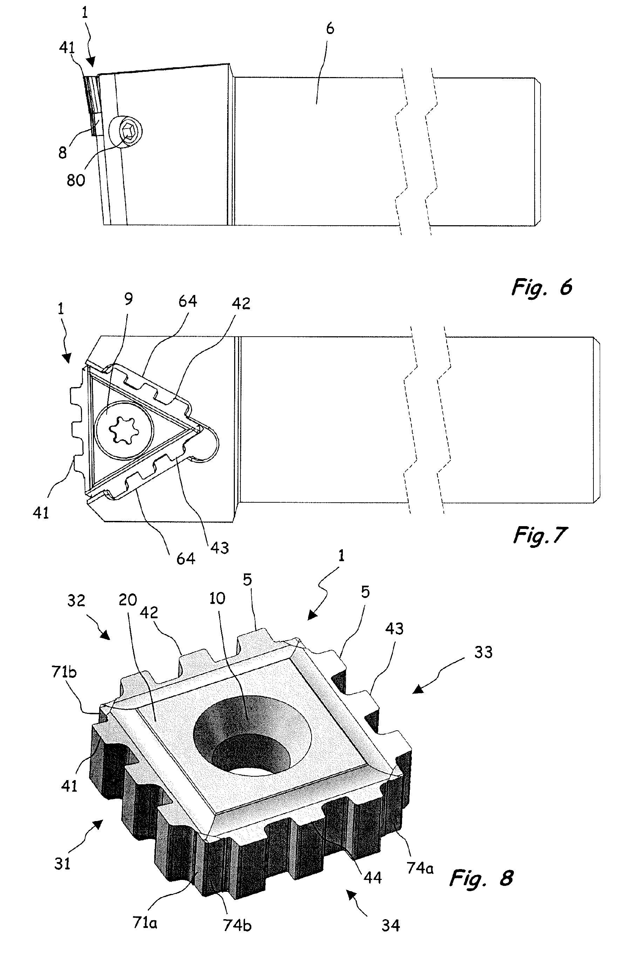

Figs. 4 to 7 show a cutting tool comprising a holder 6 with a pocket 60 for receiving the cutting insert 1 of fig. 1 to 3, wherein fig. 4 is a schematic perspective view of the cutting tool, fig. 5 is a schematic explosive view of the cutting tool; fig. 6 is a schematic side view of the cutting tool; and fig. 7 is a schematic top view of the cutting tool.

The pocket 60 is provided with a bottom positioning wall 61 and two supporting side walls 62, 63, wherein the insert 1 is received in the pocket 60 in such way that one of the three cutting edges 41 protrudes from the pocket 60 for the threading operation. The lateral walls 32, 33 associated to currently unused cutting edges 42, 43 are positioned opposite the supporting walls 62, 63. In the embodiment shown, the two supporting surfaces 72a and 72b sandwiching the currently unused cutting edge 42 that adjoins the currently used cutting edge 41 in clockwise direction both abut the respective supporting side wall 62. For avoiding that the support becomes statically overdetermined, at the lateral wall 33 associated to the cutting edge 43 that adjoins the currently used cutting edge 41 in counterclockwise direction only the second supporting surface 73b abuts the respective supporting side wall 63. in other embodiments, the two supporting surfaces 73a and 73b sandwiching the currently unused cutting edge 43 that adjoins the currently used cutting edge 41 in counterclockwise direction both abut the respective supporting side wall 63, whereas only one of the two supporting surfaces 72a and 72b sandwiching the currently unused cutting edge 42 that adjoins the currently used cutting edge 41 in clockwise direction abuts the respective supporting side wall 62.

The supporting side walls 62, 63 are each provided with a recess 64 for accommodating the cutting edges 42, 43 not in use.

In the embodiment shown in figs. 4 to 7, the cutting tool further comprises an anvil 8 on which the insert 1 is placed. For an assembly, at first the anvil 8 is placed in the insert pocket 60 and locked in the pocket 60 using a lock screw 80, which is inserted via a through hole 65 provided on the side of the holder. Next, the insert 1 is placed on top of the anvil 8 and the clamping screw 9 is inserted in the through hole 10 of the insert 1 and tightened.

Fig. 8 schematically shows an embodiment of a cutting insert 1 for thread cutting, wherein in the embodiment shown in fig. 8, the cutting insert 1 has an essentially square shape. The thread cutting insert 1 comprises an upper face 20, a (non-visible) lower face, and four lateral walls 31, 32, 33, 34 extending between the upper face 20 and the lower face. At least in the transition region between each lateral wall 31, 32, 33, 34 and the upper face 20, a cutting edge 41, 42, 43, 44 with three outwardly projecting cutting teeth 5 is formed. In one embodiment, additional cutting edges are the transition region between each lateral wall 31, 32, 33, 34 and the lower face.

On each side wall 31, 32, 33, 34 a first supporting surface 71 a, 74a and a second supporting surface 71 b, 74b are provided, wherein the cutting teeth 5 are sandwiched between the first supporting surface 71 a, 74a and the second supporting surface 71 b, 74b. The insert 1 is positioned in a pocket of a respective tool holder (not depicted) using the supporting surfaces 71a, 74a and 71b, 74b. As the supporting surfaces 71a, 74a and 71 b, 74b are arranged on both sides of the cutting edges 41, 42, 43, 44, a distance between the supporting surfaces 71a, 74a and 71 b, 74b is maximized and the positioning stability is optimized.

In the embodiment shown in fig. 8, the lateral walls 31, 32, 33, 34 are not inclined and the supporting surfaces 71 a, 74a and 71 b, 74b extend approximately over the entire height of the lateral walls 31, 32, 33, 34.

## Claims

1. A thread cutting insert comprising an upper face (20) and a lower face (21), at least three lateral walls (31, 32, 33, 34) extending between the upper face (20) and the lower face (21), and at least two cutting edges (41, 42, 43, 44) formed in a transition region between two of the lateral walls (31, 32, 33, 34) and the upper face (20),
**characterized in that**
at least one of the cutting edges (41, 42, 43, 44) is sandwiched between a first supporting surface (71 a, 72a, 73a, 74a) and a second supporting surface (71 b, 72b, 73b, 74b) provided on the associated lateral wall (31, 32, 33, 34).

2. A thread cutting insert of claim 1, **characterized in that** the lower face (21) is essentially planar for positioning the insert in a pocket (60) of a tool holder (6).

3. A thread cutting insert of claim 1 or 2, **characterized in that** the upper face (20) comprises an essentially planar top surface (22).

4. A thread cutting insert of claim 2 or 3, **characterized in that** the first supporting surface (71a, 72a, 73a, 74a) and/or the second supporting surface (71 b, 72b, 73b, 74b) extends essentially perpendicular to the planar lower face (21) and/or the planar top surface (22).

5. A thread cutting insert of any of claims 1 to 4, **characterized in that** each cutting edge (41, 42, 43, 44) comprises a plurality of cutting teeth (5).

6. A thread cutting insert of any of claims 1 to 5, **characterized in that** at least the lateral walls provided with a cutting edge (41, 42, 43, 44) are inclined for assuring a clearance during thread turning.

7. A thread cutting insert of any of claims 1 to 6, **characterized in that** the insert (1) is provided with a central through hole (10) for receiving a clamping screw (9).

8. A thread cutting insert of any of claims 1 to 7, **characterized in that** the insert (1) has an essentially triangular shape with three lateral walls (31, 32. 33).

9. A thread cutting insert of any of claims 1 to 8, **characterized in that** the insert (1) is an indexable insert, wherein cutting edges (41, 42, 43, 44) are formed in the transition region between the lateral walls (31, 32, 33, 34) and the upper face (20), each cutting edge (41, 42, 43, 44) being sandwiched between a first supporting surface (71 a, 72a, 73a, 74a) and a second supporting surface (71 b, 72b, 73b, 74b) provided on the associated lateral wall (31, 32, 33, 34).

10. A tool holder (6) provided with a pocket (60) for receiving a thread cutting insert (1) of any of claims 1 to 9, **characterized in that** the pocket (60) is provided with at least one supporting side wall (62, 63) for abutment of a first supporting surface (71 a, 72a, 73a, 74a) and/or a second supporting surface (71 b, 72b, 73b, 74b) provided on one lateral wall (31, 32, 33, 34) of the insert.

11. A tool holder of claim 10, **characterized in that** the at least one supporting side wall (62, 63) is provided with a recess (64) for receiving the cutting edge (41, 42, 43, 44) sandwiched between the first supporting surface (71a, 72a, 73a, 74a) and the second supporting surface (71 b, 72b, 73b, 74b).

12. Cutting tool comprising a tool holder (6) provided with a pocket (60) according to any of claims 10 or 11 and a thread cutting insert (1) of any of claims 1 to 9 detachably received in the pocket (60).

13. Cutting tool of claim 12, **characterized in that** clamping means are provided for detachably fixing the insert (1) in the pocket (60).

14. Cutting tool of claim 13, **characterized in that** the clamping means comprise at least one clamping screw (9).

15. Cutting tool of claim 12, 13 or 14, **characterized in that** an anvil (80) is provided for orienting the insert in the pocket (60).
